# EUROPEAN PATENT APPLICATION

(11) **EP 4 557 802 A1**
(43) Date of publication of application: **21.05.2025**
(21) Application number: 22950755.3
(22) Date of filing: 15.07.2022
(51) Int. Cl.: H04W 24/02

(54) **ORBITAL ANGULAR MOMENTUM OAM MODE SWITCHING METHOD AND APPARATUS, DEVICE AND STORAGE MEDIUM**

(71) Applicant: Beijing Xiaomi Mobile Software Co., Ltd., Beijing 100085 (CN)
(72) Inventor: CHI, Liangang, Beijing 100085 (CN); DUAN, Gaoming, Beijing 100085 (CN)
(74) Representative: Gunzelmann, Rainer
(86) International application number: PCT/CN2022/106121
(87) International publication number: WO 2024/011637

(57) **Abstract**

The present disclosure provides an OAM mode switching method and apparatus, a device and a storage medium, and the method comprises: determining a interval required for a relay device and/or a terminal device to complete demodulation and decoding of indication information regarding an OAM mode; determining a target OAM mode to be switched by the relay device and/or terminal device; sending indication information regarding the target OAM mode to the relay device and/or terminal device; and based on the interval, switching the OAM mode. The method disclosed by the invention allows a network device and a relay device and/or terminal device to perform OAM switching at the same or similar time, thereby reducing switching time delay, avoiding a situation where the switching time delay of the terminal device causes the relay device and/or terminal device to not be synchronized with the network device, and ensuring OAM switching stability.

## Description

### TECHNICAL FIELD

The disclosure relates to a field of communication technology, in particular to an orbital angular momentum (OAM) mode switching method, a communication apparatus and a storage medium.

### BACKGROUND

In order to solve the shortage of frequency spectrum resources, a uniform circular array (UCA) is usually used to establish an orbital angular momentum (OAM) communication system. However, in a UCA-based OAM communication system, due to dynamic change of channel environment, in order to ensure the transmission performance, an OAM mode used for transmission of a transceiver also need to be switched.

In the related art, when the transceivers need to switch the OAM mode, a signal transmitter sends indication information of an OAM mode to be switched to a signal receiver and switch to the OAM mode. After receiving the indication information, the signal receiver demodulates and decodes the indication information to determine the OAM mode to be switched, and also switches to the OAM mode.

However, in the related art, it takes a certain time for the signal receiver demodulate and decode the indication information, and demodulation and decoding capabilities of different signal receivers are different. There is thus a switching delay at the signal receiver from receiving a switch signaling to finish the mode switching. Therefore, an OAM mode switching method is urgently needed, to avoid mode asynchrony between the transmitter and the receiver caused by the switching delay at the signal receiver.

### SUMMARY

The disclosure provides an orbital angular momentum (OAM) mode switching method, an apparatus, a device and a storage medium, to avoid mode asynchrony between a transmitter and a receiver caused by a switching delay at the signal receiver.

According to a first aspect of embodiments of the disclosure, an OAM mode switching method is provided. The method is performed by a network device, and includes:
determining a time interval required for a relay device and/or a terminal to complete demodulation and decoding of indication information for an OAM mode;
determining a target OAM mode to be switched by the relay device and/or the terminal;
sending indication information for the target OAM mode to the relay device and/or the terminal; and
performing OAM mode switching based on the time interval.

In the disclosure, an OAM mode switching method is provided. The network device determines a time interval required for a relay device and/or a terminal to complete demodulation and decoding of indication information for an OAM mode, and then determines a target OAM mode to be switched by the relay device and/or the terminal. Afterwards, the network device sends indication information for the target OAM mode to the relay device and/or the terminal, and performs the OAM mode switching based on the time interval. Therefore, in the embodiments of the disclosure, after the network device determines the time interval required for the relay device and/or the terminal to complete the demodulation and decoding of the indication information for the OAM mode, the time interval will be taken into account during the subsequently OAM mode switching, and the relay device and/or the terminal will also take the time interval into account during the OAM mode switching. In this way, the network device and the relay device and/or the terminal may perform the OAM mode switching at the same or close moment, which thus reducing a switching delay, avoiding a mode asynchrony between the relay device and/or the terminal and the network device caused by the switching delay at the terminal, and thereby ensuring a stability of OAM switching.

According to a second aspect of embodiments of the disclosure, an OAM mode switching method is provided. The method is performed by a relay device and/or a terminal, and includes:
determining a time interval required for the relay device and/or the terminal to complete demodulation and decoding of indication information for an OAM mode;
receiving indication information for a target OAM mode sent by a network device; and
performing OAM mode switching based on the time interval.

According to a third aspect of embodiments of the disclosure, a communication apparatus is provided. The device is configured in a network device, and includes:
a processing module, configured to determine a time interval required for a relay device and/or a terminal to complete demodulation and decoding of indication information for an OAM mode;
the processing module, further configured to determine a target OAM mode to be switched by the relay device and/or the terminal;
a transceiver module, configured to send indication information for the target OAM mode to the relay device and/or the terminal; and
the processing module, further configured to perform OAM mode switching based on the time interval.

According to a fourth aspect of embodiments of the disclosure, a communication apparatus is provided. The device is configured in a relay device and/or a terminal, and includes:
a processing module, configured to determine a time interval required for the relay device and/or the terminal to complete demodulation and decoding of indication information for an OAM mode;
a transceiver module, configured to receive indication information for a target OAM mode sent by a network device; and
the processing module, further configured to perform OAM mode switching based on the time interval.

According to a fifth aspect of embodiments of the disclosure, a communication apparatus is provided. The communication apparatus includes a processor, and when the processor calls computer programs stored in a memory, the method of the first aspect is implemented.

According to a sixth aspect of embodiments of the disclosure, a communication apparatus is provided. The communication apparatus includes a processor, and when the processor calls computer programs stored in a memory, the method of the second aspect is implemented.

According to a seventh aspect of embodiments of the disclosure, a communication apparatus including a processor and a memory having computer programs stored thereon is provided. When the computer programs are executed by the processor, the apparatus is caused to implement the method of the first aspect.

According to an eighth aspect of embodiments of the disclosure, a communication apparatus including a processor and a memory having computer programs stored thereon is provided. When the computer programs are executed by the processor, the apparatus is caused to implement the method of the second aspect.

According to a ninth aspect of embodiments of the disclosure, a communication apparatus including a processor and an interface circuit is provided. The interface circuit is configured to receive code instructions and transmit the code instructions to the processor, and the processor is configured to run the code instructions to cause the device to perform the method of the first aspect.

According to a tenth aspect of embodiments of the disclosure, a communication apparatus including a processor and an interface circuit is provided. The interface circuit is configured to receive code instructions and transmit the code instructions to the processor, and the processor is configured to run the code instructions to cause the device to perform the method of the second aspect.

According to an eleventh aspect of embodiments of the disclosure, a communication system is provided. The system includes the communication apparatus described in the third aspect and the communication apparatus described in the fourth aspect, or the system includes the communication apparatus described in the fifth aspect and the communication apparatus described in the sixth aspect, or the communication apparatus described in the seventh aspect and the communication apparatus described in the eighth aspect, or the system includes the communication apparatus described in the ninth aspect and the communication apparatus described in the tenth aspect.

According to a twelfth aspect of embodiments of the disclosure, a computer-readable storage medium is provided. The medium is used for storing instructions for the network device and/or the terminal. When the instructions are executed, the network device is caused to perform the method described in the first aspect, and/or, the terminal is caused to perform the method described in the second aspect.

According to a thirteenth aspect of embodiments of the disclosure, a computer program product including computer programs is provided. When the computer programs are run by a computer, the computer is caused to perform any one of the methods described in the first aspect and the second aspect.

According to a fourteenth aspect of embodiments of the disclosure, a chip system is provided. The chip system includes at least one processor and an interface for supporting the network device in realizing the functions involved in the first aspect, and/or, supporting the terminal in realizing the functions involved in the second aspect, e.g., determining or processing at least one of data or information involved in the method described above. In a possible design, the chip system further includes a memory. The memory is configured to store necessary computer programs and data of the terminal. The chip system may consist of chips or may include a chip and other discrete components.

According to a fifteenth aspect of embodiments of the disclosure, a computer program is provided. When the computer program is run by a computer, the computer is caused to perform any one of the methods described in the first aspect and the second aspect.

### BRIEF DESCRIPTION OF THE DRAWINGS

The foregoing and/or additional aspects and advantages of the disclosure will become apparent and readily understood from the following description of embodiments in combination with the accompanying drawings, in which:
FIG. 1 is a schematic diagram of a communication system according to an embodiment of the disclosure.
FIG. 2 is a flowchart of an orbital angular momentum (OAM) mode switching method according to an embodiment of the disclosure.
FIG. 3 is a flowchart of an OAM mode switching method according to another embodiment of the disclosure.
FIG. 4 is a flowchart of an OAM mode switching method according to further another embodiment of the disclosure.
FIG. 5 is a flowchart of an OAM mode switching method according to yet another embodiment of the disclosure.
FIG. 6 is a flowchart of an OAM mode switching method according to yet another embodiment of the disclosure.
FIGS. 7a-7b are flowcharts of an OAM mode switching method according to yet another embodiment of the disclosure.
FIG. 8 is a flowchart of an OAM mode switching method according to yet another embodiment of the disclosure.
FIG. 9 is a flowchart of an OAM mode switching method according to yet another embodiment of the disclosure.
FIG. 10 is a flowchart of an OAM mode switching method according to yet another embodiment of the disclosure.
FIG. 11 is a flowchart of an OAM mode switching method according to yet another embodiment of the disclosure.
FIG. 12 is a schematic diagram of a communication apparatus according to an embodiment of the disclosure.
FIG. 13 is a schematic diagram of a communication apparatus according another embodiment of the disclosure.
FIG. 14 is a block diagram of a communication apparatus according an embodiment of the disclosure.
FIG. 15 is a schematic diagram of a chip according an embodiment of the disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

The terms used in the disclosure are only for the purpose of describing specific embodiments, and are not intended to limit the embodiments of the disclosure. The singular forms of "a" and "the" used in the disclosure and appended claims are also intended to include plural forms, unless the context clearly indicates other meanings. It should also be understood that the term "and/or" as used herein refers to and includes any or all possible combinations of one or more associated listed items.

It is understandable that although the terms "first", "second", and "third" may be used in the disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if" as used herein may be interpreted as "when", "while" or "in response to determining".

The embodiments of the disclosure will be described in detail, examples of which are illustrated in the accompanying drawings, in which the same or similar numbers indicate the same or similar elements throughout. The embodiments described below with reference to the accompanying drawings are exemplary and are intended to explain the disclosure, and should not be construed as limiting the disclosure.

For ease of understanding, terms involved in this disclosure are introduced first.

### 1. Relay device

The relay device is a device for achieving relay communication between a terminal and a base station.

### 2. Orbital angular momentum (OAM)

OAM is an angular momentum generated due to spiral phase structure of a beam.

It should be noted that, in this disclosure, a method provided by any embodiment may be executed alone, and any implementation in the embodiment may also be executed alone, or be executed in combination with other embodiments or possible implementations in other embodiments, or in combination with any technical solution in the related art.

In order to better understand an OAM mode switching method disclosed in embodiments of the disclosure, a communication system to which the embodiments of the disclosure is applicable will be described below.

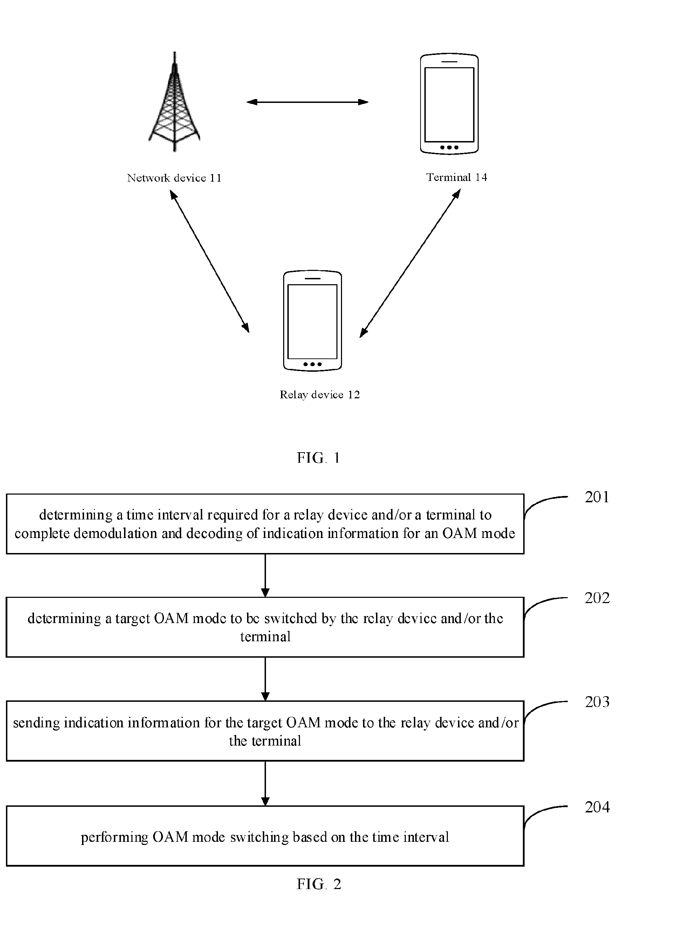

As illustrated in FIG. 1, FIG. 1 is a schematic diagram of a communication system according to an embodiment of the disclosure. The communication system may include, but is not limited to, a network device, a relay device and a terminal. The number and form of devices illustrated in FIG. 1 are only for examples and do not constitute a limitation on the embodiment of the disclosure, and two or more network devices and two or more terminals may be included in practical applications. The communication system in FIG. 1 includes, for example, a network device 11, a relay device 12 and a terminal 13.

It is noteworthy that the technical solutions of the embodiments of the disclosure may be applied to various communication systems, such as, a long term evolution (LTE) system, a 5th generation (5G) mobile communication system, a 5G new radio (NR) system, or other future new mobile communication systems.

The network device 11 in the embodiment of the disclosure is an entity on a network side for transmitting or receiving signals. For example, the network device 11 may be an evolved NodeB (eNB), a transmission reception point (TRP), a next generation NodeB (gNB) in a NR system, a base station in other future mobile communication systems, or an access node in a wireless fidelity (WiFi) system. The specific technology and specific device form adopted by the network device are not limited in the embodiment of the disclosure. The network device provided by the embodiment of the disclosure may be composed of a central unit (CU) and a distributed unit (DU). The CU may also be referred to as a control unit. The use of CU-DU structure allows to divide a protocol layer of the network device, such as a base station, such that some functions of the protocol layer are placed in the CU for a centralized control, and some or all of the remaining functions of the protocol layer are distributed in the DU, and the DU is centrally controlled by the CU.

The relay device 12 and the terminal 13 in the embodiment of the disclosure are entities on a user side for receiving or transmitting signals, such as cellular phones. The terminal may also be referred to as terminal, user equipment (UE), mobile station (MS), mobile terminal (MT), and the like. The terminal may be a car with communication functions, a smart car, a mobile phone, a wearable device, a Pad, a computer with wireless transceiver functions, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal device in smart home, etc. The specific technology and specific device form adopted by the terminal device are not limited in the embodiment of the disclosure.

It is understandable that the communication system described in the embodiment of the disclosure is intended to clearly illustrate the technical solutions of the embodiments of the disclosure, and does not constitute a limitation on the technical solutions provided by the embodiments of the disclosure. It is understandable by those skilled in the art that as system architectures evolve and new business scenarios emerge, the technical solutions provided by the embodiments of the disclosure are also applicable to similar technical problems.

An OAM mode switching method, an apparatus, a device and a storage medium provided by the embodiments of the disclosure are described in detail with reference to the accompanying drawings.

FIG. 2 is a flowchart of an OAM mode switching method according to an embodiment of the disclosure. The method is performed by a network device. As illustrated in FIG. 2, the OAM mode switching method includes the following steps.

At step 201, a time interval required for a relay device and/or a terminal to complete demodulation and decoding of indication information for an OAM mode is determined.

In the embodiment of the disclosure, a communication connection is established between the relay device and/or the terminal and the network device.

In an embodiment of the disclosure, the time interval includes N time units, and N is a positive integer. The time unit may be any one or more of an absolute time unit (such as N seconds or N milliseconds), a number of orthogonal frequency division multiplexing (OFDM) symbols (such as N OFDM symbols), a number of slots (such as N slots) and a number of sub-frames (such as N sub-frames).

In an embodiment of the disclosure, determining the time interval required for the relay device and/or the terminal to complete demodulation and decoding of the indication information for the OAM mode, includes at least one of:
obtaining the time interval reported by the relay device and/or the terminal; or
determining the time interval corresponding to the relay device and/or the terminal based on a protocol agreement.

At step 202, a target OAM mode to be switched by the relay device and/or the terminal is determined.

In an embodiment of the disclosure, the above network device may determine the target OAM mode based on a channel measurement result of a channel between the relay device and/or the terminal and the network device. The target OAM mode may be an OAM group consisting of at least one OAM mode.

At step 203, indication information for the target OAM mode is sent to the relay device and/or the terminal.

In an embodiment of the disclosure, the network device may send the indication information for the target OAM mode to the relay device and/or the terminal via a signaling, which specifically includes at least one of:
sending the indication information to the relay device and/or the terminal through a downlink control information (DCI) signaling;
sending the indication information to the relay device and/or the terminal through a radio resource control (RRC) signaling; or
sending the indication information to the relay device and/or the terminal through a media access control-control element (MAC-CE) signaling.

In an embodiment of the disclosure, the network device may send different indication for indicating respectively target OAM modes corresponding to an uplink channel and a downlink channel to the relay device and/or the terminal, and/or, send indication information for indicating uniformly the target OAM mode corresponding to an uplink channel and a downlink channel to the relay device and/or the terminal. This part will be described in detail in the following embodiments.

At step 204, OAM mode switching is performed based on the time interval.

In an embodiment of the disclosure, the specific method for the network device to perform the OAM mode switching based on the time interval will be introduced in detail in the following embodiments.

In conclusion, in the OAM mode switching method provided by the embodiment of the disclosure, the network device determines a time interval required for a relay device and/or a terminal to complete demodulation and decoding of indication information for an OAM mode, and then determines a target OAM mode to be switched by the relay device and/or the terminal. Afterwards, the network device sends indication information for the target OAM mode to the relay device and/or the terminal, and performs the OAM mode switching based on the time interval. Therefore, in the embodiments of the disclosure, after the network device determines the time interval required for the relay device and/or the terminal to complete the demodulation and decoding of the indication information for the OAM mode, the time interval will be taken into account during the subsequently OAM mode switching, and the relay device and/or the terminal will also take the time interval into account during the OAM mode switching. In this way, the network device and the relay device and/or the terminal may perform the OAM mode switching at the same or close moment, which thus reducing a switching delay, avoiding a mode asynchrony between the relay device and/or the terminal and the network device caused by the switching delay at the terminal, and thereby ensuring a stability of OAM switching.

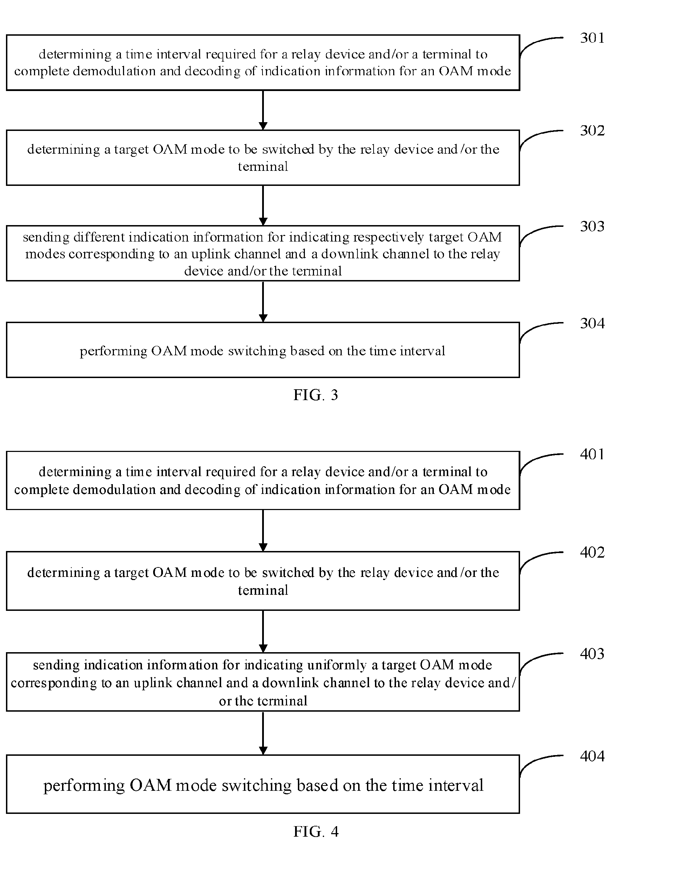

FIG. 3 is a flowchart of an OAM mode switching method provided by an embodiment of the disclosure. The method is performed by a network device. As illustrated in FIG. 3, the OAM mode switching method includes the following steps.

At step 301, a time interval required for a relay device and/or a terminal to complete demodulation and decoding of indication information for an OAM mode is determined.

At step 302, a target OAM mode to be switched by the relay device and/or the terminal is determined.

The detailed descriptions of steps 301-302 may be described with reference to the above embodiment.

At step 303, different indication information for indicating respectively target OAM modes corresponding to an uplink channel and a downlink channel is sent to the relay device and/or the terminal.

In an embodiment of the disclosure, the target OAM modes corresponding to the uplink and downlink channels may be different. Therefore, it is necessary to indicate the target OAM modes corresponding to the uplink and downlink channels respectively. In detail, the network device may send first indication information for indicating a target OAM mode corresponding to the uplink channel to the relay device and/or the terminal, and/or send second indication information for indicating a target OAM mode corresponding to the downlink channel to the relay device and/or the terminal.

In addition, it should be noted that, as may be seen from the above embodiments, the network device may send the indication information to the relay device and/or the terminal through at least one of a DCI signaling, an RRC signaling and a MAC-CE signaling. On the basis, the first indication information and the second indication information above may be included in the same signaling (e.g., both included in a DCI signaling, an RRC signaling or a MAC -CE signaling) and sent to the relay device and/or the terminal. Alternatively, the first indication information and the second indication information may be included in different signalings and sent to the relay device and/or the terminal. For example, the first indication information and the second indication information may be included in different signalings of the same type. For example, the first indication information may be included in a DCI-1 signaling and the second indication information may be included in a DCI-2 signaling.

At step 304, OAM mode switching is performed based on the time interval.

In an embodiment of the disclosure, the specific method for network devices to perform the OAM mode switching based on the time interval will be introduced in detail in the following embodiments.

In conclusion, in the OAM mode switching method provided by the embodiment of the disclosure, the network device determines a time interval required for a relay device and/or a terminal to complete demodulation and decoding of indication information for an OAM mode, and then determines a target OAM mode to be switched by the relay device and/or the terminal. Afterwards, the network device sends indication information for the target OAM mode to the relay device and/or the terminal, and performs the OAM mode switching based on the time interval. Therefore, in the embodiments of the disclosure, after the network device determines the time interval required for the relay device and/or the terminal to complete the demodulation and decoding of the indication information for the OAM mode, the time interval will be taken into account during subsequently OAM mode switching, and the relay device and/or the terminal will also take the time interval into account during the OAM mode switching. In this way, the network device and the relay device and/or the terminal may perform the OAM mode switching at the same or close moment, which thus reducing a switching delay, avoiding a mode asynchrony between the relay device and/or the terminal and the network device caused by the switching delay at the terminal, and thereby ensuring a stability of OAM switching.

FIG. 4 is a flowchart of an OAM mode switching method provided by an embodiment of the disclosure. The method is performed by a network device. As illustrated in FIG. 4, the OAM mode switching method includes the following steps.

At step 401, a time interval required for a relay device and/or a terminal to complete demodulation and decoding of indication information for an OAM mode is determined.

At step 402, a target OAM mode to be switched by the relay device and/or the terminal is determined.

The detailed descriptions of steps 401-402 may be described with reference to the above embodiment.

At step 403, indication information for indicating uniformly the target OAM mode corresponding to an uplink channel and a downlink channel is sent to the relay device and/or the terminal.

In an embodiment of the disclosure, based on an assumption of channel reciprocity, the uplink channel and the downlink channel may use the same OAM mode for a period of time. For example, in a case of time division duplexing (TDD), the indication information for the target OAM mode corresponding to the uplink channel and the downlink channel may be indicated uniformly, without indicating respectively, which may save a signaling overhead.

In detail, the network device may send one indication information to the relay device and/or the terminal, and the target OAM mode indicated by the indication information is a target OAM mode corresponding uniformly to the uplink channel and the downlink channel.

Other details about step 403 may be described with reference to the above embodiment.

At step 404, OAM mode switching is performed based on the time interval.

In an embodiment of the disclosure, the specific method for the network device to perform the OAM mode switching based on this time interval will be introduced in detail in the following embodiments.

In conclusion, in the OAM mode switching method provided by the embodiment of the disclosure, the network device determines a time interval required for a relay device and/or a terminal to complete demodulation and decoding of indication information for an OAM mode, and then determines a target OAM mode to be switched by the relay device and/or the terminal. Afterwards, the network device sends indication information for the target OAM mode to the relay device and/or the terminal, and performs the OAM mode switching based on the time interval. Therefore, in the embodiments of the disclosure, after the network device determines the time interval required for the relay device and/or the terminal to complete the demodulation and decoding of the indication information for the OAM mode, the time interval will be taken into account during subsequently OAM mode switching, and the relay device and/or the terminal will also take the time interval into account during the OAM mode switching. In this way, the network device and the relay device and/or the terminal may perform the OAM mode switching at the same or close moment, which thus reducing a switching delay, avoiding a mode asynchrony between the relay device and/or the terminal and the network device caused by the switching delay at the terminal, and thereby ensuring a stability of OAM switching.

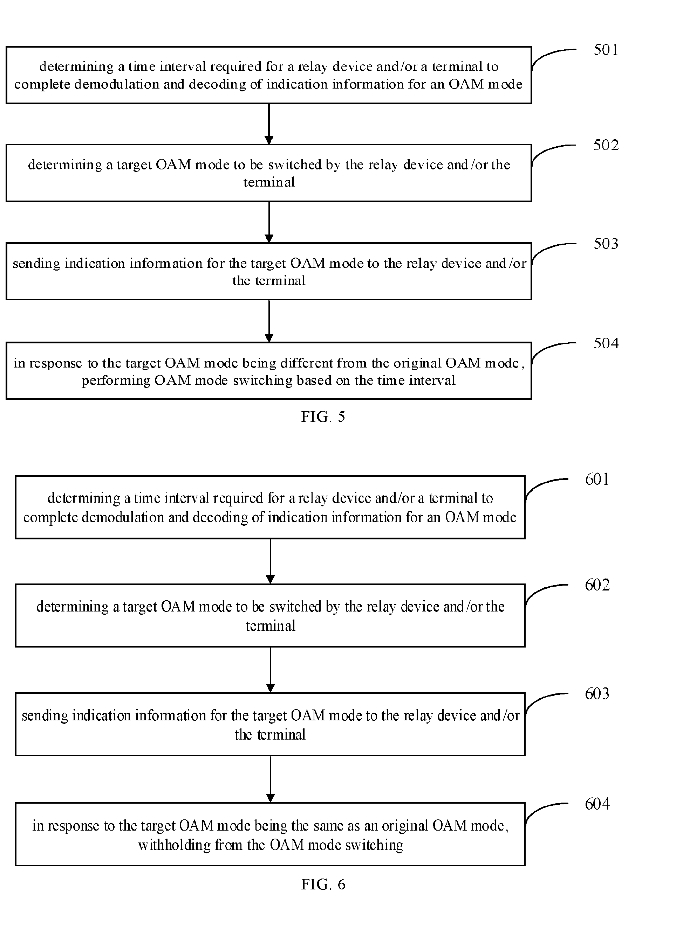

FIG. 5 is a flowchart of an OAM mode switching method provided by an embodiment of the disclosure. The method is performed by a network device. As illustrated in FIG. 5, the OAM mode switching method includes the following steps.

At step 501, a time interval required for a relay device and/or a terminal to complete demodulation and decoding of indication information for an OAM mode is determined.

At step 502, a target OAM mode to be switched by the relay device and/or the terminal is determined.

At step 503, indication information for the target OAM mode is sent to the relay device and/or the terminal.

The detailed descriptions of steps 501-503 may be described with reference to the above embodiment.

At step 504, in response to the target OAM mode being different from an original OAM mode, OAM mode switching is performed based on the time interval.

In an embodiment of the disclosure, the original OAM mode is an OAM mode adopted by the network device before switching.

In an embodiment of the disclosure, the method for the OAM mode switching based on the time interval includes:

communicating with the relay device and/or the terminal in a specific mode within a first duration, in which the first duration is from a first moment to a second moment, the first moment is a moment when the network device sends the indication information, and the second moment is a sum of the first moment and the time interval. The specific mode is determined by a protocol agreement or by the network device independently. In the case that the specific mode is determined by the network device independently, the network device needs to configure the specific mode to the relay device and/or the terminal. The specific mode includes any one of:
an OAM mode corresponding to a most recently used data channel;
an OAM mode corresponding to a control channel; or
a specific OAM mode, in which the specific OAM mode may be agreed upon between a base station and the relay device and/or the terminal in advance, or the specific OAM mode may be configured to the relay specific and/or the terminal by the base station in advance.

The method for the OAM mode switching based on the time interval further includes: switching to the target OAM mode within a second duration to communicate with the relay device and/or the terminal based on the target OAM mode, in which the second duration is from a second moment to a third moment, and the third moment is a moment when the network device sends new indication information.

In an embodiment of the disclosure, each of the first moment, the second moment and the third moment may include any one of an absolute time, an OFDM symbol sequence number, a slot sequence number or a sub-frame sequence number.

It should be noted that in an embodiment of the disclosure, in response to each of the first moment, the second moment and the third moment including any one of the absolute time, the OFDM symbol sequence number, the slot sequence number or the sub-frame sequence number, the OFDM symbol sequence number, the slot sequence number or the sub-frame sequence number corresponding to each of the first moment, the second moment and the third moment is determined with reference to a sending timing or a receiving timing of a wireless frame.

In detail, a sending frame and a receiving frame of the wireless frame are both 10 millisecond (ms), where 10ms=10 sub-frames. Taking a subcarrier bandwidth of 15 KHz as an example, 1 sub-frame=1 slot=14 OFDM symbols, so one wireless frame has 140 OFDM symbols. If the OFDM symbol is determined based on the sending timing or receiving timing of the wireless frame, the specific OFDM symbol determined is: which OFDM symbol in which slot of which sub-frame. If the slot sequence number is determined based on the sending timing or receiving timing of the wireless frame, the specific slot sequence number determined is: which slot of which sub-frame. If the sub-frame sequence number is determined based on the sending timing or receiving timing of the wireless frame, the specific sub-frame sequence number determined is: which sub-frame.

In conclusion, in the OAM mode switching method provided by the embodiment of the disclosure, the network device determines a time interval required for a relay device and/or a terminal to complete demodulation and decoding of indication information for an OAM mode, and then determines a target OAM mode to be switched by the relay device and/or the terminal. Afterwards, the network device sends indication information for the target OAM mode to the relay device and/or the terminal, and performs OAM mode switching based on the time interval. Therefore, in the embodiments of the disclosure, after the network device determines the time interval required for the relay device and/or the terminal to complete the demodulation and decoding of the indication information for the OAM mode, the time interval will be taken into account during subsequently OAM mode switching, and the relay device and/or the terminal will also take the time interval into account during the OAM mode switching. In this way, the network device and the relay device and/or the terminal may perform the OAM mode switching at the same or close moment, which thus reducing a switching delay, avoiding a mode asynchrony between the relay device and/or the terminal and the network device caused by the switching delay at the terminal, and thereby ensuring a stability of OAM switching.

FIG. 6 is a flowchart of an OAM mode switching method provided by an embodiment of the disclosure. The method is performed by a network device. As illustrated in FIG. 6, the OAM mode switching method includes the following steps.

At step 601, a time interval required for a relay device and/or a terminal to complete demodulation and decoding of indication information for an O AM mode is determined.

At step 602, a target OAM mode to be switched by the relay device and/or the terminal is determined.

At step 603, indication information for the target OAM mode is sent to the relay device and/or the terminal.

The detailed descriptions of steps 601-603 may be described with reference to the above embodiment.

At step 604, in response to the target OAM mode being the same as an original OAM mode, the network device does not perform OAM mode switching.

In conclusion, in the OAM mode switching method provided by the embodiment of the disclosure, the network device determines a time interval required for a relay device and/or a terminal to complete demodulation and decoding of indication information for an OAM mode, and then determines a target OAM mode to be switched by the relay device and/or the terminal. Afterwards, the network device sends indication information for the target OAM mode to the relay device and/or the terminal, and performs the OAM mode switching based on the time interval. Therefore, in the embodiments of the disclosure, after the network device determines the time interval required for the relay device and/or the terminal to complete the demodulation and decoding of the indication information for the OAM mode, the time interval will be taken into account during subsequently OAM mode switching, and the relay device and/or the terminal will also take the time interval into account during OAM mode switching. In this way, the network device and the relay device and/or the terminal may perform the OAM mode switching at the same or close moment, which thus reducing a switching delay, avoiding a mode asynchrony between the relay device and/or the terminal and the network device caused by the switching delay at the terminal, and thereby ensuring a stability of OAM switching.

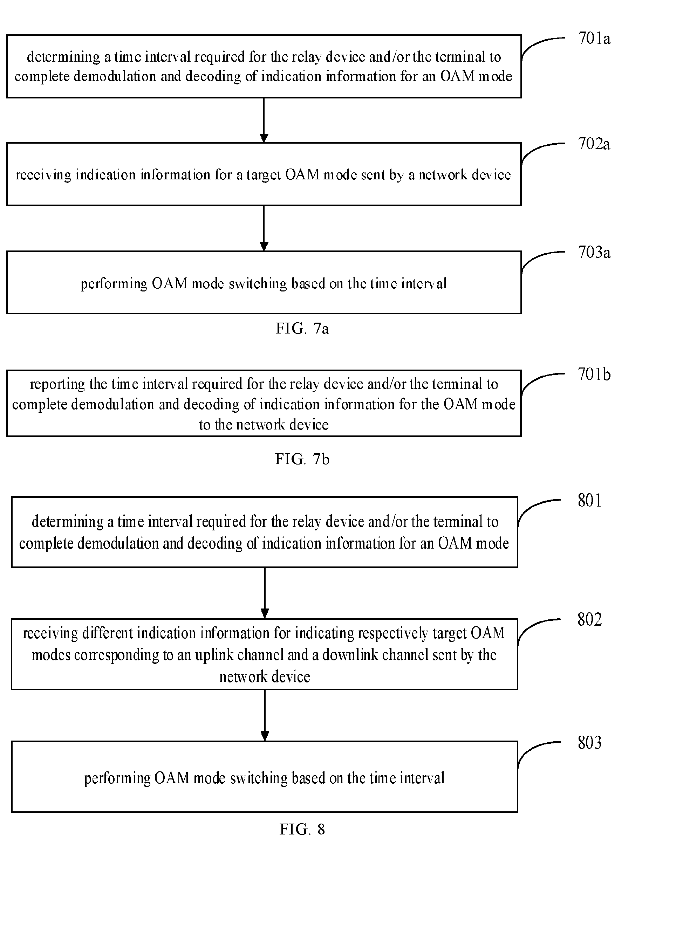

FIG. 7a is a flowchart of an OAM mode switching method provided by an embodiment of the disclosure. The method is performed by a relay device and/or a terminal. As illustrated in FIG. 7a, the OAM mode switching method includes the following steps.

At step 701a, a time interval required for the relay device and/or the terminal to complete demodulation and decoding of indication information for an OAM mode is determined.

In an embodiment of the disclosure, the time interval includes N time units, and N is a positive integer. The time unit may be one or more of an absolute time unit, a number of OFDM symbols, a number of slots or a number of sub-frames.

In an embodiment of the disclosure, determining the time interval required for the relay device and/or the terminal to complete the demodulation and decoding of the indication information for the OAM mode, includes at least one of:
determining the time interval corresponding to the relay device and/or the terminal based on a protocol agreement; or
determining the time interval corresponding to the relay device and/or the terminal independently.

At step 702a, indication information for a target OAM mode sent by a network device is received.

In an embodiment of the disclosure, the target OAM mode is an OAM group consisting of at least one OAM mode.

In an embodiment of the disclosure, receiving, by the relay device and/or the terminal, the indication information for the target OAM mode sent by the network device, includes at least one of:
receiving the indication information sent by network device through a DCI signaling;
receiving the indication information sent by network device through an RRC signaling; or
receiving the indication information sent by network device through a MAC-CE signaling.

At step 703a, OAM mode switching is performed based on the time interval.

The detailed descriptions of steps 701a-703a may be described with reference to the above embodiment.

In conclusion, in the OAM mode switching method provided by the embodiment of the disclosure, the relay device and/or the terminal may determine a time interval required for the relay device and/or the terminal to complete demodulation and decoding of indication information for an OAM mode. After receiving indication information for a target OAM mode sent by the network device, the relay device and/or the terminal performs OAM mode switching based on the time interval. Therefore, in the embodiment of the disclosure, after the relay device and/or the terminal determines the time interval required to complete the demodulation and decoding of the indication information for the OAM mode, the time interval will be taken into account during subsequently OAM mode switching, and the network device will also take the time interval into account during the OAM mode switching, which thus avoids a switching delay between the switching on the network device side and the switching on the relay device and/or the terminal side, thereby ensuring a stability of OAM switching.

FIG. 7b is a flowchart of an OAM mode switching method provided by an embodiment of the disclosure. The method is performed by a relay device and/or a terminal. As illustrated in FIG. 7b, the OAM mode switching method includes the following steps.

At step 701b, a time interval required for the relay device and/or the terminal to complete demodulation and decoding of indication information for an OAM mode is reported to a network device.

In conclusion, in the OAM mode switching method provided by the embodiment of the disclosure, the relay device and/or the terminal may determine a time interval required for the relay device and/or the terminal to complete demodulation and decoding of indication information for an OAM mode. After receiving indication information for a target OAM mode sent by the network device, the relay device and/or the terminal performs OAM mode switching based on the time interval. Therefore, in the embodiment of the disclosure, after the relay device and/or the terminal determines the time interval required to complete the demodulation and decoding of the indication information for the OAM mode, the time interval will be taken into account during subsequently OAM mode switching, and the network device will also take the time interval into account during the OAM mode switching, which thus avoids a switching delay between the switching on the network device side and the switching on the relay device and/or the terminal side, thereby ensuring a stability of OAM switching.

FIG. 8 is a flowchart of an OAM mode switching method provided by an embodiment of the disclosure. The method is performed by a relay device and/or a terminal. As illustrated in FIG. 8, the OAM mode switching method includes the following steps.

At step 801, a time interval required for the relay device and/or the terminal to complete demodulation and decoding of indication information for an OAM mode is determined.

At step 802, different indication information for indicating respectively target OAM modes corresponding to an uplink channel and a downlink channel sent by a network device is received.

At step 803, OAM mode switching is performed based on the time interval.

The detailed descriptions of steps 801-803 may be described with reference to the above embodiment.

In conclusion, in the OAM mode switching method provided by the embodiment of the disclosure, the relay device and/or the terminal may determine a time interval required for the relay device and/or the terminal to complete demodulation and decoding of indication information for an OAM mode. After receiving indication information for a target OAM mode sent by the network device, the relay device and/or the terminal performs OAM mode switching based on the time interval. Therefore, in the embodiment of the disclosure, after the relay device and/or the terminal determines the time interval required to complete the demodulation and decoding of the indication information for the OAM mode, the time interval will be taken into account during subsequently OAM mode switching, and the network device will also take the time interval into account during the OAM mode switching, which thus avoids a switching delay between the switching on the network device side and the switching on the relay device and/or the terminal side, thereby ensuring a stability of OAM switching.

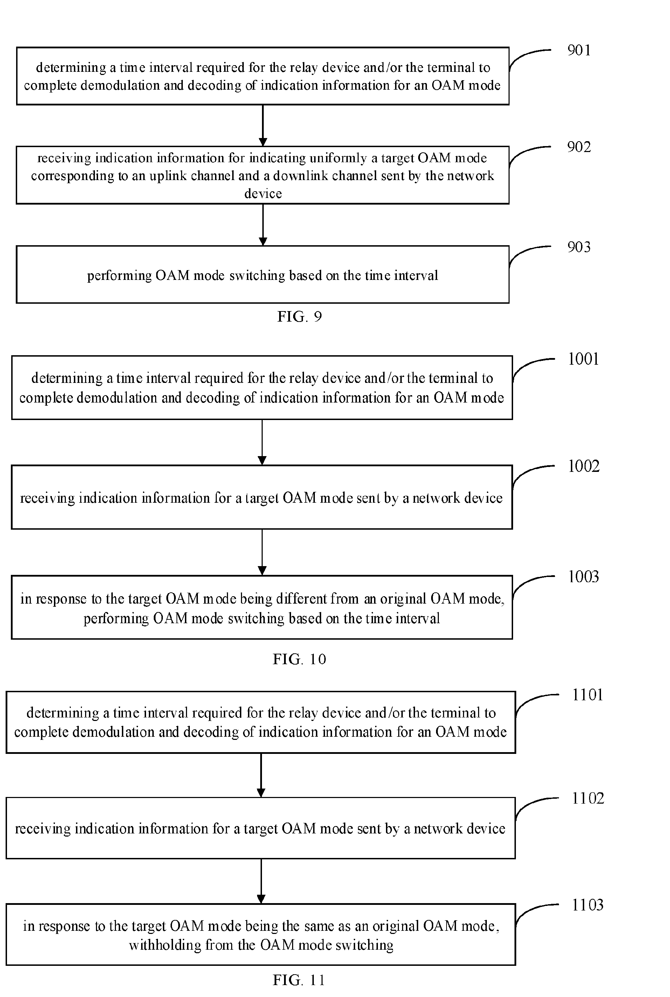

FIG. 9 is a flowchart of an OAM mode switching method provided by an embodiment of the disclosure. The method is performed by a relay device and/or a terminal. As illustrated in FIG. 9, the OAM mode switching method includes the following steps.

At step 901, a time interval required for the relay device and/or the terminal to complete demodulation and decoding of indication information for an OAM mode is determined.

At step 902, indication information for uniformly a target OAM mode corresponding to an uplink channel and a downlink channel sent by a network device is received.

At step 903, OAM mode switching is performed based on the time interval.

The detailed descriptions of steps 901-903 may be described with reference to the above embodiment.

In conclusion, in the OAM mode switching method provided by the embodiment of the disclosure, the relay device and/or the terminal may determine a time interval required for the relay device and/or the terminal to complete demodulation and decoding of indication information for an OAM mode. After receiving indication information for a target OAM mode sent by the network device, the relay device and/or the terminal performs OAM mode switching based on the time interval. Therefore, in the embodiment of the disclosure, after the relay device and/or the terminal determines the time interval required to complete the demodulation and decoding of the indication information for the OAM mode, the time interval will be taken into account during subsequently OAM mode switching, and the network device will also take the time interval into account during the OAM mode switching, which thus avoids a switching delay between the switching on the network device side and the switching on the relay device and/or the terminal side, thereby ensuring a stability of OAM switching.

FIG. 10 is a flowchart of an OAM mode switching method provided by an embodiment of the disclosure. The method is performed by a relay device and/or a terminal. As illustrated in FIG. 10, the OAM mode switching method includes the following steps.

At step 1001, a time interval required for the relay device and/or the terminal to complete demodulation and decoding of indication information for an OAM mode is determined.

At step 1002, indication information for a uniform target OAM mode sent by a network device is determined.

The detailed descriptions of steps 1001-1002 may be described with reference to the above embodiment.

At step 1003, in response to the target OAM mode being different from an original OAM mode, OAM mode switching is performed based on the time interval.

In an embodiment of the disclosure, the original OAM mode is an OAM mode adopted by the network device before switching.

In an embodiment of the disclosure, the method for the OAM mode switching based on the time interval may include:
communicating with the relay device and/or the terminal in a specific mode within a third duration, in which the third duration is from a fourth moment to a fifth moment, the fourth moment is a moment when the relay device and/or the terminal receives the indication information, the fifth moment is a sum of the fourth moment and the time interval. The specific mode is determined by a protocol agreement or configured by the network device. The specific mode includes any one of:
an OAM mode corresponding to a most recently used data channel;
an OAM mode corresponding to a control channel; or

a specific OAM mode, in which the specific OAM mode may be agreed upon between a base station and the relay device and/or the terminal in advance, or the specific OAM mode may be configured to the relay specific and/or the terminal by the base station in advance; and

The method for the OAM mode switching based on the time interval may further include: communicating with the relay device and/or the terminal based on the target OAM mode within a fourth duration, in which the fourth duration is from a fifth moment to a sixth moment, and the sixth moment is a moment when the relay device and/or the terminal receives new indication information.

In an embodiment of the disclosure, each of the fourth moment, the fifth moment and the sixth moment may include any one of an absolute time, an OFDM symbol sequence number, a slot sequence number or a sub-frame sequence number.

It should be noted that in an embodiment of the disclosure, in response to each of the fourth moment, the fifth moment and the sixth moment including any one of the OFDM symbol sequence number, the slot sequence number or the sub-frame sequence number, the OFDM symbol sequence number, the slot sequence number or the sub-frame sequence number corresponding to each of the fourth moment, the fifth moment and the sixth moment is determined with reference to a sending timing or a receiving timing of a wireless frame.

In detail, a sending frame and a receiving frame of the wireless frame are both 10ms, where 10ms=10 sub-frames. Taking a subcarrier bandwidth of 15 KHz as an example, 1 sub-frame=1 slot=14 OFDM symbols, so one wireless frame has 140 OFDM symbols. If the OFDM symbol is determined based on the sending timing or receiving timing of the wireless frame, the specific OFDM symbol determined is: which OFDM symbol in which slot of which sub-frame. If the slot sequence number is determined based on the sending timing or receiving timing of the wireless frame, the specific slot sequence number determined is: which slot of which sub-frame. If the sub-frame sequence number is determined based on the sending timing or receiving timing of the wireless frame, the specific sub-frame sequence number determined is: which sub-frame.

In conclusion, in the OAM mode switching method provided by the embodiment of the disclosure, the relay device and/or the terminal may determine a time interval required for the relay device and/or the terminal to complete demodulation and decoding of indication information for an OAM mode. After receiving indication information for a target OAM mode sent by the network device, the relay device and/or the terminal performs OAM mode switching based on the time interval. Therefore, in the embodiment of the disclosure, after the relay device and/or the terminal determines the time interval required to complete the demodulation and decoding of the indication information for the OAM mode, the time interval will be taken into account during subsequently OAM mode switching, and the network device will also take the time interval into account during the OAM mode switching, which thus avoids a switching delay between the switching on the network device side and the switching on the relay device and/or the terminal side, thereby ensuring a stability of OAM switching.

FIG. 11 is a flowchart of an OAM mode switching method provided by an embodiment of the disclosure. The method is performed by a relay device and/or a terminal. As illustrated in FIG. 11, the OAM mode switching method includes the following steps.

At step 1101, a time interval required for the relay device and/or the terminal to complete demodulation and decoding of indication information for an OAM mode is determined.

At step 1102, indication information for a uniform target OAM mode sent by a network device is determined.

The detailed descriptions of steps 1101-1102 may be described with reference to the above embodiment.

At step 1103, in response to the target OAM mode being the same as an original OAM mode, the relay device and/or the terminal does not perform OAM mode switching.

In an embodiment of the disclosure, the original OAM mode is an OAM mode adopted by the network device before switching.

In conclusion, in the OAM mode switching method provided by the embodiment of the disclosure, the relay device and/or the terminal may determine a time interval required for the relay device and/or the terminal to complete demodulation and decoding of indication information for an OAM mode. After receiving indication information for a target OAM mode sent by the network device, the relay device and/or the terminal performs OAM mode switching based on the time interval. Therefore, in the embodiment of the disclosure, after the relay device and/or the terminal determines the time interval required to complete the demodulation and decoding of the indication information for the OAM mode, the time interval will be taken into account during subsequently OAM mode switching, and the network device will also take the time interval into account during the OAM mode switching, which thus avoids a switching delay between the switching on the network device side and the switching on the relay device and/or the terminal side, thereby ensuring a stability of OAM switching.

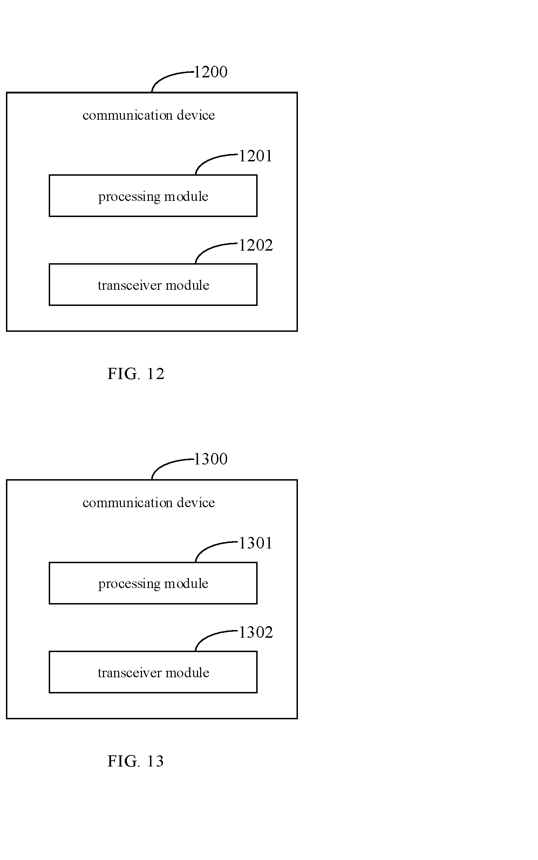

FIG. 12 is a schematic diagram of a communication apparatus provided by an embodiment of the disclosure. As illustrated in FIG. 12, the apparatus includes:
a processing module, configured to determine a time interval required for a relay device and/or a terminal to complete demodulation and decoding of indication information for an OAM mode;
the processing module, further configured to determine a target OAM mode to be switched by the relay device and/or the terminal;
a transceiver module, configured to send indication information for the target OAM mode to the relay device and/or the terminal; and
the processing module, further configured to perform OAM mode switching based on the time interval.

In conclusion, with the communication apparatus provided by the embodiment of the disclosure, the network device determines a time interval required for a relay device and/or a terminal to complete demodulation and decoding of indication information for an OAM mode, and then determines a target OAM mode to be switched by the relay device and/or the terminal. Afterwards, the network device sends indication information for the target OAM mode to the relay device and/or the terminal, and performs the OAM mode switching based on the time interval. Therefore, in the embodiments of the disclosure, after the network device determines the time interval required for the relay device and/or the terminal to complete the demodulation and decoding of the indication information for the OAM mode, the time interval will be taken into account during subsequently OAM mode switching, and the relay device and/or the terminal will also take the time interval into account during OAM mode switching. In this way, the network device and the relay device and/or the terminal may perform the OAM mode switching at the same or close moment, which thus reducing a switching delay, avoiding a mode asynchrony between the relay device and/or the terminal and the network device caused by the switching delay at the terminal, and thereby ensuring a stability of OAM switching.

Optionally, in an embodiment of the disclosure, the time interval includes N time units, and N is a positive integer. The time unit may be one or more of an absolute time unit, a number of OFDM symbols, a number of slots or a number of sub-frames.

Optionally, in an embodiment of the disclosure, the processing module is configured to perform at least one of:
obtaining the time interval reported by the relay device and/or the terminal; or
determining the time interval corresponding to the relay device and/or the terminal based on a protocol agreement.

Optionally, in an embodiment of the disclosure, the target OAM mode is an OAM group consisting of at least one OAM mode.

Optionally, in an embodiment of the disclosure, the transceiver module is configured to perform at least one of:
sending the indication information to the relay device and/or the terminal through a DCI signaling;
sending the indication information to the relay device and/or the terminal through an RRC signaling; or
sending the indication information to the relay device and/or the terminal through a MAC-CE signaling.

Optionally, in an embodiment of the disclosure, the transceiver module is configured to perform at least one of:
sending different indication information for indicating respectively target OAM modes corresponding to an uplink channel and a downlink channel to the relay device and/or the terminal; or
sending indication information for indicating uniformly a target OAM mode corresponding to an uplink channel and a downlink channel to the relay device and/or the terminal.

Optionally, in an embodiment of the disclosure, the processing module is configured to:
in response to the target OAM mode being the same as an original OAM mode, withholding from the OAM mode switching; or
in response to the target OAM mode being different from the original OAM mode, perform following operations:
communicating with the relay device and/or the terminal in a specific mode within a first duration, wherein the first duration is from a first moment to a second moment, the first moment is a moment when the network device sends the indication information, the second moment is a sum of the first moment and the time interval, and the specific mode comprises any one of:
   an OAM mode corresponding to a most recently used data channel;
   an OAM mode corresponding to a control channel; or
   a specific OAM mode; and
   communicating with the relay device and/or the terminal based on the target OAM mode within a second duration, wherein the second duration is from a second moment to a third moment, and the third moment is a moment when the network device sends new indication information.

Optionally, in an embodiment of the disclosure, each of the first moment, the second moment and the third moment comprises any one of an absolute time, an OFDM symbol sequence number, a slot sequence number or a sub-frame sequence number; and
in response to each of the first moment, the second moment and the third moment comprising any one of the OFDM symbol sequence number, the slot sequence number or the sub-frame sequence number, the OFDM symbol sequence number, the slot sequence number or the sub-frame sequence number corresponding to each of the first moment, the second moment and the third moment is determined with reference to a sending timing or a receiving timing of a wireless frame.

Optionally, in an embodiment of the disclosure, the specific mode is determined by a protocol agreement or by the network device independently.

Optionally, in an embodiment of the disclosure, in response to the specific mode being determined by the network device independently, the apparatus is further configured to:
configure the specific mode to the relay device and/or the terminal.

FIG. 13 is a schematic diagram of a communication apparatus provided by an embodiment of the disclosure. As illustrated in FIG. 3, the apparatus further includes:
a processing module, configured to determine a time interval required for the relay device and/or the terminal to complete demodulation and decoding of indication information for an OAM mode;
a transceiver module, configured to receive indication information for a target OAM mode sent by a network device; and
the processing module, further configured to perform OAM mode switching based on the time interval.

In conclusion, in the communication apparatus provided by the embodiment of the disclosure, the relay device and/or the terminal may determine a time interval required for the relay device and/or the terminal to complete demodulation and decoding of indication information for an OAM mode. After receiving indication information for a target OAM mode sent by the network device, the relay device and/or the terminal performs OAM mode switching based on the time interval. Therefore, in the embodiment of the disclosure, after the relay device and/or the terminal determines the time interval required to complete the demodulation and decoding of the indication information for the OAM mode, the time interval will be taken into account during subsequently OAM mode switching, and the network device will also take the time interval into account during the OAM mode switching, which thus avoids a switching delay between the switching on the network device side and the switching on the relay device and/or the terminal side, thereby ensuring a stability of OAM switching.

Optionally, in an embodiment of the disclosure, the time interval includes N time units, and N is a positive integer. The time unit is one or more of an absolute time unit, a number of OFDM symbols, a number of slots or a number of sub-frames.

Optionally, in an embodiment of the disclosure, the processing module is further configured to perform at least one of:
determining the time interval corresponding to the relay device and/or the terminal based on a protocol agreement; or
determining the time interval corresponding to the relay device and/or the terminal independently.

Optionally, in an embodiment of the disclosure, the device is further configured to:
report the time interval to the network device.

Optionally, in an embodiment of the disclosure, the target OAM mode is an OAM group consisting of at least one OAM mode.

Optionally, in an embodiment of the disclosure, the transceiver module is configured to perform at least one of:
receiving the indication information sent by network device through a DCI signaling;
receiving the indication information sent by network device through an RRC signaling; or
receiving the indication information sent by network device through a MAC-CE signaling.

Optionally, in an embodiment of the disclosure, the transceiver module is configured to perform at least one of:
receiving different indication information for indicating respectively target OAM modes corresponding to an uplink channel and a downlink channel sent by the network device; or
receiving indication information for indicating uniformly a target OAM mode corresponding to an uplink channel and a downlink channel sent by the network device.

Optionally, in an embodiment of the disclosure, the processing module is configured to:
in response to the target OAM mode being the same as an original OAM mode, withholding from the OAM mode switching; or
in response to the target OAM mode being different from the original OAM mode, performing:
communicating with the relay device and/or the terminal in a specific mode within a third duration, wherein the third duration is from a fourth moment to a fifth moment, the fourth moment is a moment when the relay device and/or the terminal receives the indication information, the fifth moment is a sum of the fourth moment and the time interval, and the specific mode comprises any one of:
   an OAM mode corresponding to a most recently used data channel;
   an OAM mode corresponding to a control channel; or
   a specific OAM mode; and
   communicating with the relay device and/or the terminal based on the target OAM mode within a fourth duration, wherein the fourth duration is from a fifth moment to a sixth moment, and the sixth moment is a moment when the relay device and/or the terminal receives new indication information.

Optionally, in an embodiment of the disclosure, each of the fourth moment, the fifth moment and the sixth moment comprises any one of an absolute time, an OFDM symbol sequence number, a slot sequence number or a sub-frame sequence number; and
in response to each of the fourth moment, the fifth moment and the sixth moment comprising any one of the OFDM symbol sequence number, the slot sequence number or the sub-frame sequence number, the OFDM symbol sequence number, the slot sequence number or the sub-frame sequence number corresponding to each of the fourth moment, the fifth moment and the sixth moment is determined with reference to a sending timing or a receiving timing of a wireless frame.

Optionally, in an embodiment of the disclosure, the specific mode is determined by a protocol agreement or configured by the network device.

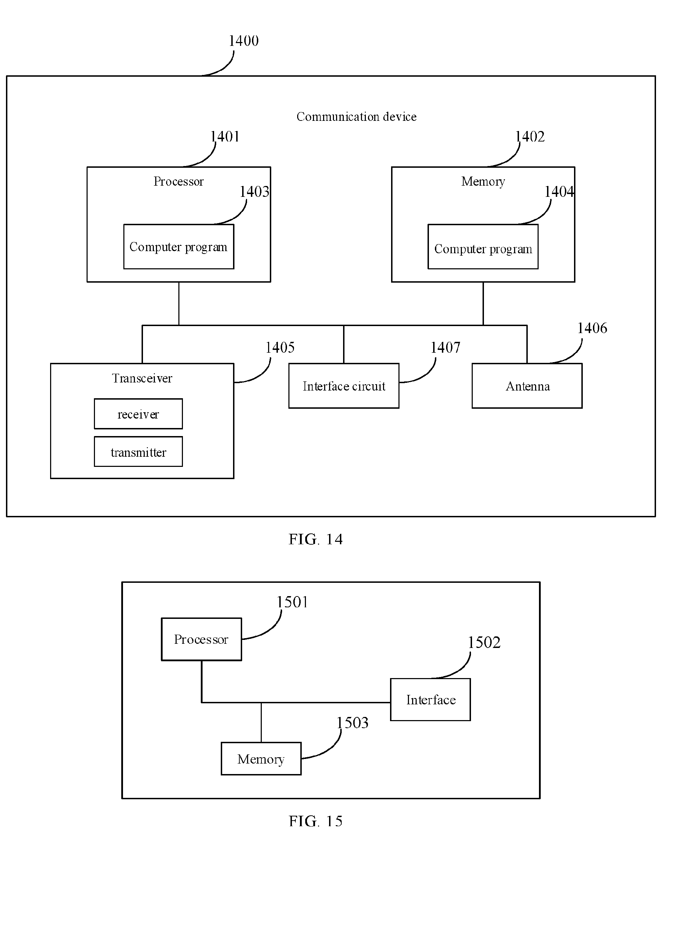

As illustrated in FIG. 14, FIG. 14 is a schematic diagram of a communication apparatus 1400 provided by an embodiment of the disclosure. The communication apparatus 1400 may be a network device, a terminal, or a chip, a chip system or a processor that supports the network device to realize the above-described methods, or a chip, a chip system or a processor that supports the terminal to realize the above-described methods. The device may be used to realize the methods described in the above method embodiments with reference to the description of the above-described method embodiments.

The communication apparatus 1400 may include one or more processors 1401. The processor 1401 may be a general purpose processor or a dedicated processor, such as, a baseband processor or a central processor. The baseband processor is used for processing communication protocols and communication data. The central processor is used for controlling the communication apparatus (e.g., base station, baseband chip, terminal, terminal chip, DU, or CU), executing computer programs, and processing data of the computer programs.

Optionally, the communication apparatus 1400 may include one or more memories 1402 on which computer programs 1404 may be stored. The processor 1401 executes the computer programs 1404 to cause the communication apparatus 1400 to perform the methods described in the above method embodiments. Optionally, data may also be stored in the memory 1402. The communication apparatus 1400 and the memory 1402 may be set separately or integrated together.

Optionally, the communication apparatus 1400 may also include a transceiver 1405 and an antenna 1406. The transceiver 1405 may be referred to as transceiver unit, transceiver machine, or transceiver circuit, for realizing the transceiver function. The transceiver 1405 may include a receiver and a transmitter. The receiver may be referred to as receiver machine or receiving circuit, for realizing the receiving function. The transmitter may be referred to as transmitter machine or transmitting circuit, for realizing the transmitting function.

Optionally, the communication apparatus 1400 may also include one or more interface circuits 1407. The interface circuits 1407 are used to receive code instructions and transmit them to the processor 1401. The processor 1401 runs the code instructions to cause the communication apparatus 1409 to perform the methods described in the method embodiments.

In an implementation, the processor 1401 may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be used for code/data reading and writing, or may be used for signal transmission or delivery.

In an implementation, the processor 1401 stores computer programs 1403. When the processor 1401 executes the computer program 1403, the communication apparatus 1400 is caused to perform the methods described in the above method embodiments. The above computer programs 1403 may be solidified in the processor 1401, in such case, the processor 1401 may be implemented by hardware.

In an implementation, the communication apparatus 1400 may include circuits. The circuits may implement the sending, receiving or communicating function in the preceding method embodiments. The processor and transceiver described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and transceiver may also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication apparatus in the above description of embodiments may be a network device or a terminal, but the scope of the communication apparatus described in the disclosure is not limited thereto, and the structure of the communication apparatus may not be limited by FIG. 14. The communication apparatus may be a stand-alone device or may be part of a larger device. For example, the described communication apparatus may be:
(1) a stand-alone IC, chip, chip system or subsystem;
(2) a collection of ICs including one or more ICs, optionally, the collection of ICs may also include storage components for storing data and computer programs;
(3) an ASIC, such as a modem;
(4) modules that may be embedded within other devices;
(5) receivers, terminal devices, smart terminal devices, cellular phones, wireless devices, handheld machines, mobile units, in-vehicle devices, network devices, cloud devices, artificial intelligence devices, and the like; and
(6) others.

The case where the communication apparatus may be a chip or a chip system may be referred to the schematic diagram of a chip shown in FIG. 15. In FIG. 15, the chip includes a processor 1501 and an interface 1502. There may be one or more processors 1501, and there may be multiple interfaces 1502.

Optionally, the chip further includes a memory 1503 for storing necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer programs on the computer, all or part of processes or functions described in the embodiments of the disclosure are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access or a data storage device such as a server and a data center integrated by one or more usable mediums. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second", and other various numerical numbers involved in the disclosure are only described for the convenience of differentiation, and are not used to limit the scope of the embodiments of the disclosure, or indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondences shown in the tables in this disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in this disclosure may not be configured. For another example, the above tables may be adjusted appropriately, such as splitting, combining, and the like. The names of the parameters shown in the titles of the above tables may be other names that may be understood by the communication apparatus, and the values or representations of the parameters may be other values or representations that may be understood by the communication apparatus. Each of the above tables may also be implemented with other data structures, such as, arrays, queues, containers, stacks, linear tables, pointers, chained lists, trees, graphs, structures, classes, heaps, and Hash tables.

The term "predefine" in this disclosure may be understood as define, define in advance, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above may be referred to the corresponding processes in the preceding method embodiments, and will not be repeated herein.

The above are only specific implementations of the disclosure, but the scope of protection of the disclosure is not limited thereto. Those skilled in the art familiar to this technical field may easily think of changes or substitutions in the technical scope disclosed by the disclosure, which shall be covered by the scope of protection of the disclosure. Therefore, the scope of protection of the disclosure shall be governed by the scope of protection of the attached claims.

## Claims

1. An orbital angular momentum (OAM) mode switching method, performed by a network device, comprising:
determining a time interval required for a relay device and/or a terminal to complete demodulation and decoding of indication information for an OAM mode;
determining a target OAM mode to be switched by the relay device and/or the terminal;
sending indication information for the target OAM mode to the relay device and/or the terminal; and
performing OAM mode switching based on the time interval.

2. The method of claim 1, wherein the time interval comprises N time units, where N is a positive integer, and the time unit is one or more of an absolute time unit, a number of orthogonal frequency division multiplexing (OFDM) symbols, a number of slots or a number of sub-frames.

3. The method of claim 1, wherein determining the time interval required for the relay device and/or the terminal to complete the demodulation and decoding of the indication information for the OAM mode, comprises at least one of:
obtaining the time interval reported by the relay device and/or the terminal; or
determining the time interval corresponding to the relay device and/or the terminal based on a protocol agreement.

4. The method of claim 1, wherein the target OAM mode is an OAM group consisting of at least one OAM mode.

5. The method of claim 1, wherein sending the indication information for the target OAM mode to the relay device and/or the terminal, comprises at least one of:
sending the indication information to the relay device and/or the terminal through a downlink control information (DCI) signaling;
sending the indication information to the relay device and/or the terminal through a radio resource control (RRC) signaling; or
sending the indication information to the relay device and/or the terminal through a media access control-control element (MAC-CE) signaling.

6. The method of claim 1, wherein sending the indication information for the target OAM mode to the relay device and/or the terminal, comprises at least one of:
sending different indication information for indicating respectively target OAM modes corresponding to an uplink channel and a downlink channel to the relay device and/or the terminal; or
sending indication information for indicating uniformly a target OAM mode corresponding to an uplink channel and a downlink channel to the relay device and/or the terminal.

7. The method of claim 1 or 4, wherein performing the OAM mode switching based on the time interval, comprises:
in response to the target OAM mode being the same as an original OAM mode, withholding from the OAM mode switching; or
in response to the target OAM mode being different from an original OAM mode, performing:
communicating with the relay device and/or the terminal in a specific mode within a first duration, wherein the first duration is from a first moment to a second moment, the first moment is a moment when the network device sends the indication information, the second moment is a sum of the first moment and the time interval, and the specific mode comprises any one of:
an OAM mode corresponding to a most recently used data channel;
an OAM mode corresponding to a control channel; or
a specific OAM mode; and
communicating with the relay device and/or the terminal based on the target OAM mode within a second duration, wherein the second duration is from a second moment to a third moment, and the third moment is a moment when the network device sends new indication information.

8. The method of claim 7, wherein each of the first moment, the second moment and the third moment comprises any one of an absolute time, an OFDM symbol sequence number, a slot sequence number or a sub-frame sequence number; and
wherein in response to each of the first moment, the second moment and the third moment comprising any one of the OFDM symbol sequence number, the slot sequence number or the sub-frame sequence number, the OFDM symbol sequence number, the slot sequence number or the sub-frame sequence number corresponding to each of the first moment, the second moment and the third moment is determined with reference to a sending timing or a receiving timing of a wireless frame.

9. The method of claim 7, wherein the specific mode is determined by a protocol agreement or by the network device independently.

10. The method of claim 9, wherein in response to the specific mode being determined by the network device independently, the method further comprises:
configuring the specific mode to the relay device and/or the terminal.

11. An orbital angular momentum (OAM) mode switching method, performed by a relay device and/or a terminal, comprising:
determining a time interval required for the relay device and/or the terminal to complete demodulation and decoding of indication information for an OAM mode;
receiving indication information for a target OAM mode sent by a network device; and
performing OAM mode switching based on the time interval.

12. The method of claim 11, wherein the time interval comprises N time units, where N is a positive integer, and the time unit is one or more of an absolute time unit, a number of orthogonal frequency division multiplexing (OFDM) symbols, a number of slots or a number of sub-frames.

13. The method of claim 11, wherein determining the time interval required for the relay device and/or the terminal to complete the demodulation and decoding of the indication information for the OAM mode, comprises at least one of:
determining the time interval corresponding to the relay device and/or the terminal based on a protocol agreement; or
determining the time interval corresponding to the relay device and/or the terminal independently.

14. The method of claim 11, further comprising:
reporting the time interval to the network device.

15. The method of claim 11, wherein the target OAM mode is an OAM group consisting of at least one OAM mode.

16. The method of claim 11 or 15, wherein receiving the indication information for the target OAM mode sent by the network device, comprises at least one of:
receiving the indication information sent by network device through a downlink control information (DCI) signaling;
receiving the indication information sent by network device through a radio resource control (RRC) signaling; or
receiving the indication information sent by network device through a media access control-control element (MAC-CE) signaling.

17. The method of claim 11, wherein receiving the indication information for the target OAM mode sent by the network device, comprises at least one of:
receiving different indication information for indicating respectively target OAM modes corresponding to an uplink channel and a downlink channel sent by the network device; or
receiving indication information for indicating uniformly a target OAM mode corresponding to an uplink channel and a downlink channel sent by the network device.

18. The method of claim 11, wherein performing the OAM mode switching based on the time interval, comprises:
in response to the target OAM mode being the same as an original OAM mode, withholding from the OAM mode switching; or
in response to the target OAM mode being different from the original OAM mode, performing:
communicating with the relay device and/or the terminal in a specific mode within a third duration, wherein the third duration is from a fourth moment to a fifth moment, the fourth moment is a moment when the relay device and/or the terminal receives the indication information, the fifth moment is a sum of the fourth moment and the time interval, and the specific mode comprises any one of:
an OAM mode corresponding to a most recently used data channel;
an OAM mode corresponding to a control channel; or
a specific OAM mode; and
communicating with the relay device and/or the terminal based on the target OAM mode within a fourth duration, wherein the fourth duration is from a fifth moment to a sixth moment, and the sixth moment is a moment when the relay device and/or the terminal receives new indication information.

19. The method of claim 18, wherein each of the fourth moment, the fifth moment and the sixth moment comprises any one of an absolute time, an OFDM symbol sequence number, a slot sequence number or a sub-frame sequence number; and
wherein in response to each of the fourth moment, the fifth moment and the sixth moment comprising any one of the OFDM symbol sequence number, the slot sequence number or the sub-frame sequence number, the OFDM symbol sequence number, the slot sequence number or the sub-frame sequence number corresponding to each of the fourth moment, the fifth moment and the sixth moment is determined with reference to a sending timing or a receiving timing of a wireless frame.

20. The method of claim 18, wherein the specific mode is determined by a protocol agreement or configured by the network device.

21. A communication apparatus, configured in a target node, comprising:
a processing module, configured to determine a time interval required for a relay device and/or a terminal to complete demodulation and decoding of indication information for an OAM mode;
the processing module, further configured to determine a target OAM mode to be switched by the relay device and/or the terminal;
a transceiver module, configured to send indication information for the target OAM mode to the relay device and/or the terminal; and
the processing module, further configured to perform OAM mode switching based on the time interval.

22. A communication apparatus, configured in a relay user equipment (UE), comprising:
a processing module, configured to determine a time interval required for the relay device and/or the terminal to complete demodulation and decoding of indication information for an OAM mode;
a transceiver module, configured to receive indication information for a target OAM mode sent by a network device; and
the processing module, further configured to perform OAM mode switching based on the time interval.

23. A communication apparatus, comprising a processor and a memory having computer programs stored therein, wherein the processor executes the computer programs stored in the memory to cause the apparatus perform the method according to any one of claims 1-10 or the method according to any one of claims 11-20.

24. A communication apparatus, comprising a processor and an interface circuit,
wherein the interface circuit is configured to receive code instructions and transmit the code instructions to the processor; and
the processor is configured to run the code instructions to perform the method according to any one of claims 1-10, or the method according to any one of claims 11-20.

25. A computer-readable storage medium for storing instructions, wherein when the instructions are executed, the method according to any one of claims 1 -10 or the method according to any one of claims 11-12 is implemented.
